# EUROPEAN PATENT APPLICATION

(11) **EP 1 213 172 A1**
(43) Date of publication of application: **12.06.2002**
(21) Application number: 00830815.7
(22) Date of filing: 11.12.2000
(51) Int. Cl.: B60J 11/00

(54) **A cover for vehicles**

(71) Applicant: Compagni, Stefano, 42013 Casalgrande, Reggio Emilia (IT)
(72) Inventor: Compagni, Stefano, 42013 Casalgrande, Reggio Emilia (IT)
(74) Representative: Gotra, Stefano

(57) **Abstract**

The protective cover comprises at least one sheet (1) provided with an inflatable hollow space (2). The sheet (1) can be spread over a vehicle (3) so as to cover and protect at least an upper surface thereof. Once the hollow space (2) is inflated with a gas, which keeps two walls (4, 5) defining the hollow space (2) apart, the gas functions as a cushion. Means for anchoring (6) removably constrain the sheet (1) to the vehicle (3) on which the sheet (1) is arranged.

## Description

Specifically, though not exclusively, the invention is usefully applied as a covering for automobiles, as a protection against particularly harsh atmospheric precipitation, such as hail, and against things falling from trees, such as pine cones.

The above constitutes the main aim of the invention, which also has the usual aims of protective covers.

An advantage of the invention is its simplicity.

A further advantage of the invention consists in the speed with which it can be applied.

These aims and advantages and others besides are all achieved by the present invention, as it is characterised in the claims that follow.

Further advantages of the present invention will better emerge from the detailed description that follows of a preferred but non-exclusive embodiment of the invention, illustrated purely by way of non-limiting example in the accompanying figures of the drawings, in which:

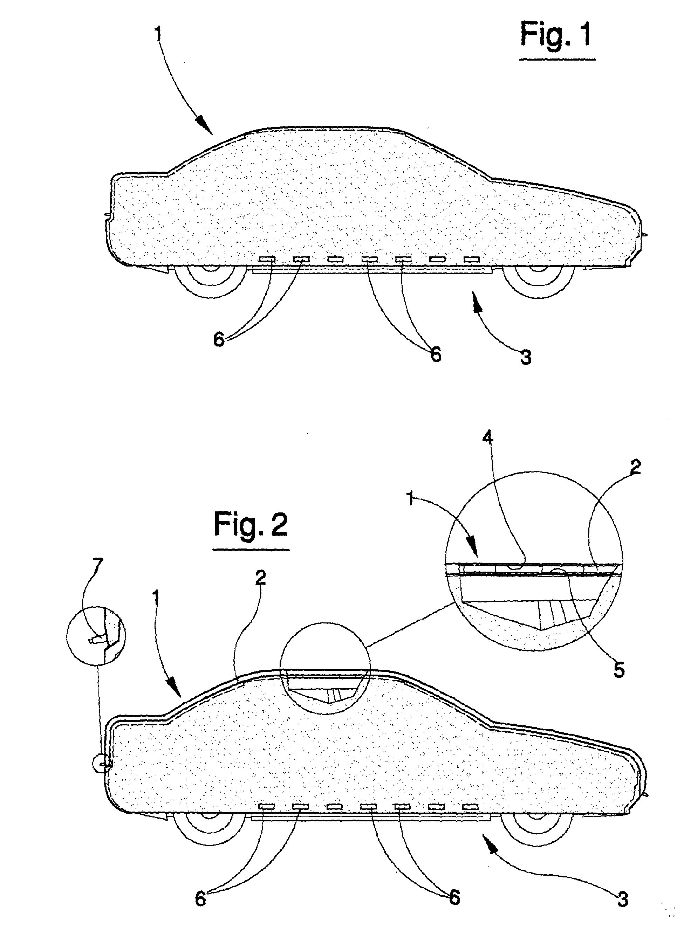

figure 1 shows the invention applied on a vehicle (an automobile);
figure 2 shows the application of figure 1 in a different operative configuration. With reference to the figures, 1 denotes a sheet for covering vehicles, which sheet 1 is provided with an inflatable hollow space 2 which can be positioned on top of the vehicle 3 so as to cover at least the upper part thereof.

The hollow space 2, when inflated, has the function of maintaining the two opposite walls 4 and 5 of the sheet 1 at a reciprocal distance of more than zero (a few centimetres), by the creation of a protective cushion of gas, which in the illustrated example is air.

The sheet 1 can be removably constrained to the vehicle 3, in the illustrated embodiment an automobile, on which vehicle the sheet 1 is arranged using means for anchoring comprising magnetic elements 6, preferably in the form of straps, which are constrained to the sheet 1 itself and which have the function of interacting with the metallic parts of the vehicle 3 (on which the sheet 1 is arranged) and thus adhering to the vehicle 3.

To guarantee firm anchoring of the sheet 1 on the vehicle 3 the magnetic elements 6 are predisposed at least near to edges of the sheet 1.

The hollow space 2 comprised between the walls 4 and 5 is gas-sealed and provided with at least one inlet-outlet mouth 7 for inflating or deflating.

The inlet-outlet mouth 7 can be provided either with a stopper or with a single-acting valve.

Inflation can be achieved using traditional means or more comfortably using a gas canister, which could be provided together with the sheet 1.

Once applied on the vehicle and inflated the invention functions as a sort of protective mattress able to safeguard the parts and surfaces of the vehicle which are most exposed to particularly violent atmospheric precipitation, such as hail, or to the fall of pine cones.

An anti-theft device can be associated to the sheet 1, for example a radio-controlled device which might be programmed to signal the removal of the sheet 1 from the vehicle it has been applied on.

The anti-theft device can use the magnetic elements 6 as sensors.

The invention has the advantages of being light and easy to apply to a vehicle.

## Claims

1. A cover for vehicles, **characterised in that** it comprises at least one sheet (1) provided with an inflatable hollow space (2), which sheet (1) can be arranged on top of a vehicle (3) in such a way as to cover at least an upper part thereof; the hollow space (2), once inflated, keeping two space-delimiting, opposite and facing walls (4, 5) of the sheet (1) apart by a distance of more than zero by creating in the hollow space (2) a protective cushion of a gas; means for anchoring being provided which removably constrain the sheet (1) to the vehicle (3) on which the sheet (1) is arranged.

2. The cover of claim 1, **characterised in that** the means for anchoring comprise magnetic elements (6) which are constrained to the sheet (1) and which have the function of interacting with metallic parts of the vehicle (3) on which the sheet (1) is predisposed, thus removably anchoring the sheet (1) to the vehicle (3).

3. The cover of claim 2, **characterised in that** the magnetic elements (6) are predisposed at least at edges of the sheet (1).

4. The cover of claim 1 or 3, **characterised in that** the hollow space (2) is gas-sealed and is provided with at least one inlet-outlet mouth (7) for inflation and deflation thereof.
